# EUROPEAN PATENT APPLICATION

(11) **EP 4 686 552 A1**
(43) Date of publication of application: **04.02.2026**
(21) Application number: 25179680.1
(22) Date of filing: 29.05.2025
(51) Int. Cl.: B29C 67/20, C08J 9/32, B29C 70/66

(54) **SYNTACTIC-FOAM PARTS AND ASSOCIATED METHODS OF MAKING THE SAME**

(30) Priority: 30.07.2024 US 202418789170
(71) Applicant: The Boeing Company, Arlington, VA 22202 (US)
(72) Inventor: WILENSKI, Mark, Arlington, 22202 (US); GROSS, Adam, Arlington, 22202 (US); GREGERSEN, Kimberly-Alice, Arlington, 22202 (US); WIDDLE, Richard, Arlington, 22202 (US); FRIEND, Michael, Arlington, 22202 (US)
(74) Representative: Boult Wade Tennant LLP

(57) **Abstract**

A method (200) of making a syntactic-foam part (142) includes loading low-density spheres (120) into a mold (102). The method also includes introducing a first resin (138) into the mold. The method further includes coating the low-density spheres with the first resin to form a coating (136), made of the first resin, around an entirety of each one of the low-density spheres. The method additionally includes solidifying the first resin after the first resin is coated on the low-density spheres. The method also includes solidifying the second resin (140) after the second resin fills the mold.

## Description

### FIELD

This disclosure relates generally to buoyancy foams, and more particularly to syntactic buoyancy foams made of low-density spheres embedded in a resin.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, marine platforms, and other marine-based systems. Typical buoyancy foams are compression resistant and, in some cases, water resistant, durable, and reliable. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the above-discussed shortcomings of prior art techniques.

The following is a non-exhaustive list of examples, which may or may not be claimed, of the subject matter, disclosed herein.

Disclosed herein is a method of making a syntactic-foam part. The method includes loading low-density spheres into a mold such that the low-density spheres form a lattice arrangement within the mold where each one of the low-density spheres contacts each one of at least two other ones of the low-density spheres at a single contact point and an interstitial space is defined between the corresponding one of the low-density spheres and the at least two other ones of the low-density spheres. The method also includes introducing a first resin into the mold. The method further includes coating the low-density spheres in the lattice arrangement with the first resin to form a coating, made of the first resin, around an entirety of each one of the low-density spheres. The method additionally includes solidifying the first resin after the first resin is coated on the low-density spheres. The method also includes solidifying the second resin after the second resin fills the mold and the interstitial space. The preceding subject matter of this paragraph characterizes example 1 of the present disclosure.

Coating the low-density spheres may include wicking portions of the first resin into gaps defined between adjacent ones of the low-density spheres and around the single contact point between the adjacent ones of the low-density spheres so that a thickness of the coating, around points of the adjacent ones of the low-density spheres nearest each other, is greater than the thickness of the coating at locations away from the points. The preceding subject matter of this paragraph characterizes example 2 of the present disclosure, wherein example 2 also includes the subject matter according to example 1, above.

The low-density spheres may be coated so that the coating around each one of the low-density spheres has a variable thickness. The preceding subject matter of this paragraph characterizes example 3 of the present disclosure, wherein example 3 also includes the subject matter according to any of examples 1-2, above.

The method may further include draining an excess portion of the first resin from the mold prior to solidifying the first resin. The preceding subject matter of this paragraph characterizes example 4 of the present disclosure, wherein example 4 also includes the subject matter according to any of examples 1-3, above.

Coating the low-density spheres may include flowing the first resin through the mold. The excess portion of the first resin may be drained from a bottom of the mold. The preceding subject matter of this paragraph characterizes example 5 of the present disclosure, wherein example 5 also includes the subject matter according to example 4, above.

The method may further include at least one of actively pushing the first resin, from a top of the mold, to urge the first resin to flow in a top-to-bottom or generally top-to-bottom direction through the mold, and actively pulling the first resin, from the bottom of the mold, to urge the first resin to flow in the top-to-bottom direction through the mold. The preceding subject matter of this paragraph characterizes example 6 of the present disclosure, wherein example 6 also includes the subject matter according to example 5, above.

The second resin may be introduced at the bottom of the mold and fills the mold in a bottom-to-top or generally bottom-to-top direction. The preceding subject matter of this paragraph characterizes example 7 of the present disclosure, wherein example 7 also includes the subject matter according to any of examples 5-6, above.

The first resin, when introduced into the mold, may include a curable material and a solvent. Draining the excess portion of the first resin may include draining at least the solvent of the first resin. The preceding subject matter of this paragraph characterizes example 8 of the present disclosure, wherein example 8 also includes the subject matter according to any of examples 4-7, above.

The first resin may have a first cure temperature. The second resin may have a second cure temperature. The first cure temperature may be lower than the second cure temperature. The preceding subject matter of this paragraph characterizes example 9 of the present disclosure, wherein example 9 also includes the subject matter according to any of examples 1-8, above.

The low-density spheres may be made of a polymeric material having a softening temperature. The first cure temperature may be less than the softening temperature. The second cure temperature may be greater than the softening temperature. The preceding subject matter of this paragraph characterizes example 10 of the present disclosure, wherein example 10 also includes the subject matter according to example 9, above.

The method may further include, after curing the first resin and before introducing the second resin, loading at least one second low-density sphere into the mold such that a corresponding one of the at least one second low-density sphere is located within the interstitial space. The second resin, when introduced into the mold, may fill the interstitial space around the corresponding one of the at least one second low-density sphere. The preceding subject matter of this paragraph characterizes example 11 of the present disclosure, wherein example 11 also includes the subject matter according to any of examples 1-10, above.

The first resin may comprise a pre-ceramic material. Solidifying the first resin may convert the pre-ceramic material into a ceramic material. The preceding subject matter of this paragraph characterizes example 12 of the present disclosure, wherein example 12 also includes the subject matter according to any of examples 1-11, above.

The first resin may be at least one of stiffer or stronger than the second resin. The preceding subject matter of this paragraph characterizes example 13 of the present disclosure, wherein example 13 also includes the subject matter according to any of examples 1-12, above.

The method may further include, after loading the low-density spheres and before introducing the first resin, applying an adhesion-promoting agent to the low-density spheres. The preceding subject matter of this paragraph characterizes example 14 of the present disclosure, wherein example 14 also includes the subject matter according to any of examples 1-13, above.

The first resin may be a resin matrix composite material that comprises reinforcement materials embedded in a matrix material. The preceding subject matter of this paragraph characterizes example 15 of the present disclosure, wherein example 15 also includes the subject matter according to any of examples 1-14, above.

At least a first one of the low-density spheres may have a first size. At least a second one of the low-density spheres may have a second size. The first size may be different than the second size. The preceding subject matter of this paragraph characterizes example 16 of the present disclosure, wherein example 16 also includes the subject matter according to any of examples 1-15, above.

Further disclosed herein is a syntactic-foam part that includes low-density spheres arranged in a lattice arrangement of at least one set of at least three low-density spheres so that an interstitial space is defined between the low-density spheres of each one of the at least one set of at least three low-density spheres. The syntactic-foam part also includes a coating, made of a first resin, around an entirety of each one of the low-density spheres. A thickness of the coating around each one of the low-density spheres varies and is greater around points of adjacent ones of the low-density spheres nearest each other of the at least one set of at least three low-density spheres than at locations away from the points. The syntactic-foam part further includes a second resin within the interstitial space and enveloping the low-density spheres. The preceding subject matter of this paragraph characterizes example 17 of the present disclosure.

The first resin may have a first cure temperature. The second resin may have a second cure temperature. The first cure temperature may be lower than the second cure temperature. The preceding subject matter of this paragraph characterizes example 18 of the present disclosure, wherein example 18 also includes the subject matter according to example 17, above.

The low-density spheres may be made of a polymeric material having a softening temperature. The first cure temperature may be less than the softening temperature. The second cure temperature may be greater than the softening temperature. The preceding subject matter of this paragraph characterizes example 19 of the present disclosure, wherein example 19 also includes the subject matter according to example 18, above.

The first resin may be at least one of stiffer or stronger than the second resin. The preceding subject matter of this paragraph characterizes example 20 of the present disclosure, wherein example 20 also includes the subject matter according to any of examples 17-19, above.

The syntactic-foam part may further include a second low-density sphere within the interstitial space. The second resin within the interstitial space envelopes the second low-density sphere. The preceding subject matter of this paragraph characterizes example 21 of the present disclosure, wherein example 21 also includes the subject matter according to any of examples 17-20, above.

A maximum thickness of the coating may be less than a maximum thickness of the second resin. The preceding subject matter of this paragraph characterizes example 22 of the present disclosure, wherein example 22 also includes the subject matter according to any of examples 17-21, above.

The syntactic-foam part may form an entirety or a portion of a marine-based system selected from the group consisting of submarine, watercraft, oil drilling rig, oil drilling component, and marine platform. The preceding subject matter of this paragraph characterizes example 23 of the present disclosure, wherein example 23 also includes the subject matter according to any of examples 17-22, above.

At least a first one of the low-density spheres may have a first size. At least a second one of the low-density spheres may have a second size. The first size may be different than the second size. The preceding subject matter of this paragraph characterizes example 24 of the present disclosure, wherein example 24 also includes the subject matter according to any of examples 17-23, above.

Additionally disclosed herein is another method of making a syntactic-foam part. The method includes loading low-density spheres into a first mold such that the low-density spheres form a lattice arrangement within the first mold where each one of the low-density spheres contacts each one of at least two other ones of the low-density spheres at a single contact point and an interstitial space is defined between the corresponding one of the low-density spheres and the at least two other ones of the low-density spheres. The method also includes introducing a first resin into the first mold. The method further includes coating the low-density spheres in the lattice arrangement with the first resin to form a coating, made of the first resin, around an entirety of each one of the low-density spheres. The method additionally includes solidifying the first resin after the first resin is coated on the low-density spheres so that the coating and the low-density spheres form an intermediate part. The method also includes removing the intermediate part from the first mold. The method further includes loading the intermediate part into a second mold. The method additionally includes introducing a second resin into the second mold so that the second resin fills the second mold and the interstitial space. The method also includes solidifying the second resin after the second resin fills the second mold and the interstitial space. The preceding subject matter of this paragraph characterizes example 25 of the present disclosure.

At least a first one of the low-density spheres may have a first size. At least a second one of the low-density spheres may have a second size. The first size may be different than the second size. The preceding subject matter of this paragraph characterizes example 26 of the present disclosure, wherein example 26 also includes the subject matter according to example 25, above.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in certain examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1 is a schematic cross-sectional front elevation view of low-density spheres being loaded into a mold;
Figure 2 is a schematic cross-sectional front elevation view of a lattice arrangement of low-density spheres in the mold of Figure 1;
Figure 3A is a schematic cross-sectional front elevation view of a first resin being introduced into the mold and coating the low-density spheres in the mold of Figure 1;
Figure 3B is a schematic cross-sectional front elevation view of low-density spheres in a lattice arrangement and coated with the first resin;
Figure 3C is a schematic cross-sectional front elevation view of low-density spheres in a lattice arrangement and coated with the first resin;
Figure 4 is a schematic cross-sectional front elevation view of a second resin being introduced into and filling the mold of Figure 1;
Figure 5 is a schematic cross-sectional front elevation view of a syntactic-foam part formed in the mold of Figure 1;
Figure 6 is a schematic flow diagram of a method of making a syntactic-foam part;
Figure 7 is a schematic cross-sectional front elevation view of a second resin being introduced into and filling the mold of Figure 1, where smaller low-density spheres are located in the interstitial spaces between the low-density spheres forming the lattice arrangement;
Figure 8 is a schematic cross-sectional front elevation view of a lattice arrangement of low-density spheres in the mold and a second resin filling the mold;
Figure 9 is a schematic cross-sectional front elevation view of a lattice arrangement of low-density spheres in the mold and a second resin filling the mold;
Figure 10 is a schematic flow chart of a method of making a syntactic-foam part; and
Figure 11 is a schematic flow chart of another method of making a syntactic-foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic foams include stacking low-density spheres into a mold in contact with each other at single contact points. The mold is then infused with only one resin, which embeds the spheres. For certain types of low-density spheres, such as glass or ceramic spheres, the single contact points can create stress risers that may cause damage to the spheres, particularly when the part is under compression. Alternatively, certain conventional methods of making syntactic-foam parts include stacking low-density spheres that have been pre-coated with a protective coating before being stacked in the mold and before the resin fills the mold. Although such pre-coated low-density spheres provide some advantages over non-coated spheres, single contact points between the protective coatings of the spheres can still cause potentially damaging stress risers and can result in an increased foam density.

Described herein are examples of a method of making syntactic-foam parts made of low-density spheres embedded in a resin that minimizes the occurrence of stress risers. The method results in a syntactic-foam part that is stronger and more reliable, on a per density basis, than conventional syntactic-foam parts. Some examples of the method include coating the low-density spheres, *in situ* in a mold, with a variable thickness coating before infusing the mold and embedding the spheres within resin. The coating is thicker where the low-density spheres contact each other or are closest to each other. Such a thicker coating in these particular locations on the low-density spheres helps reduce the occurrence of stress risers and improves the overall strength-to-weight ratio of the syntactic-foam part made by the method.

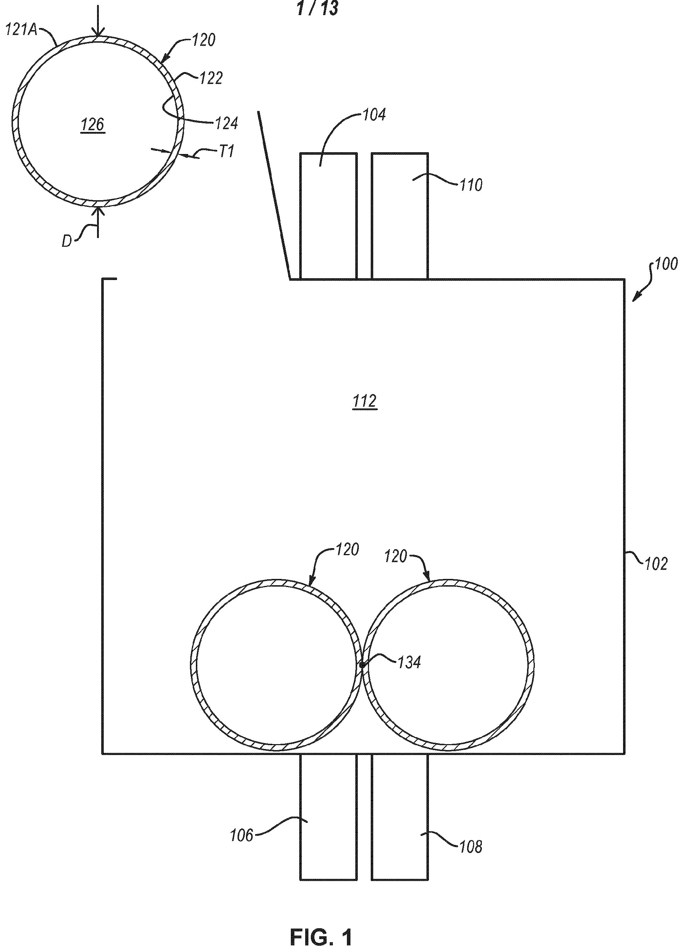

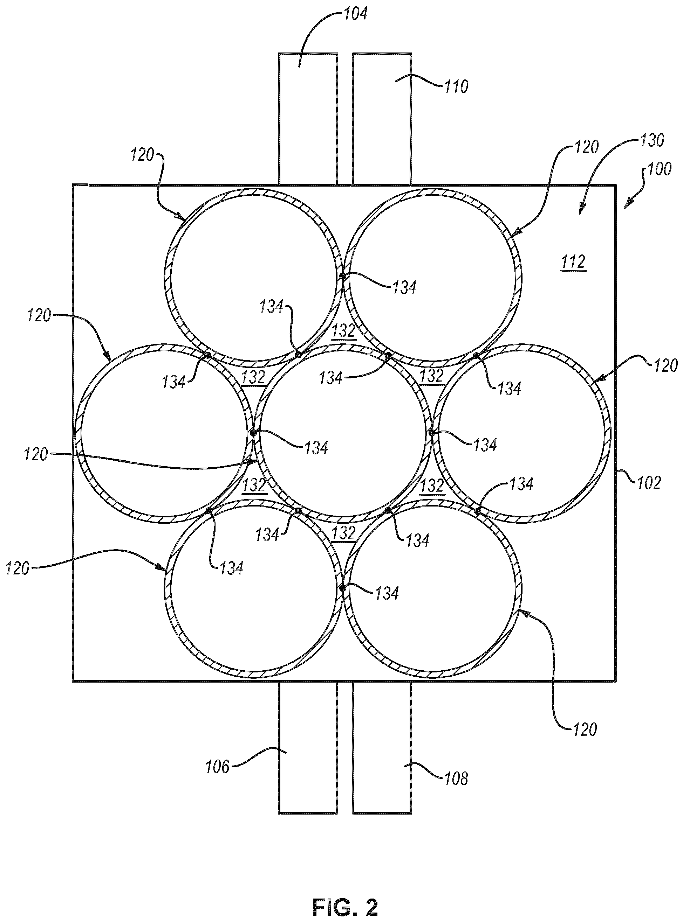

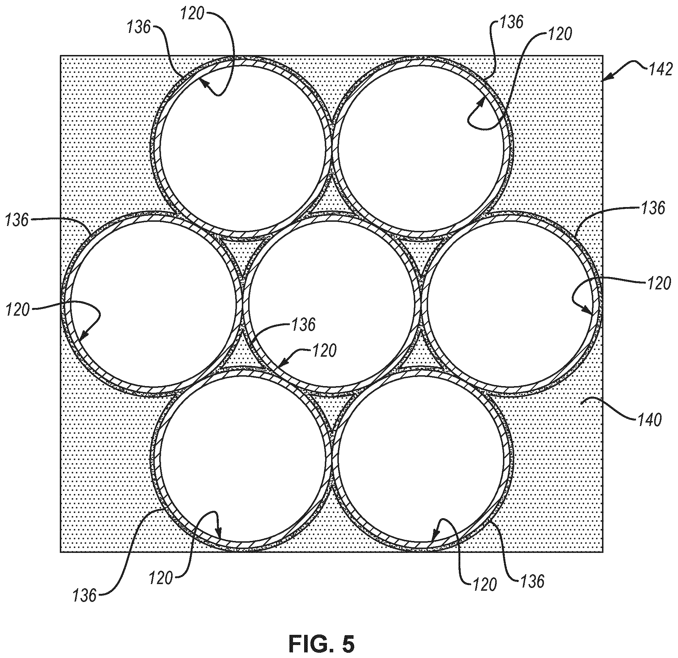

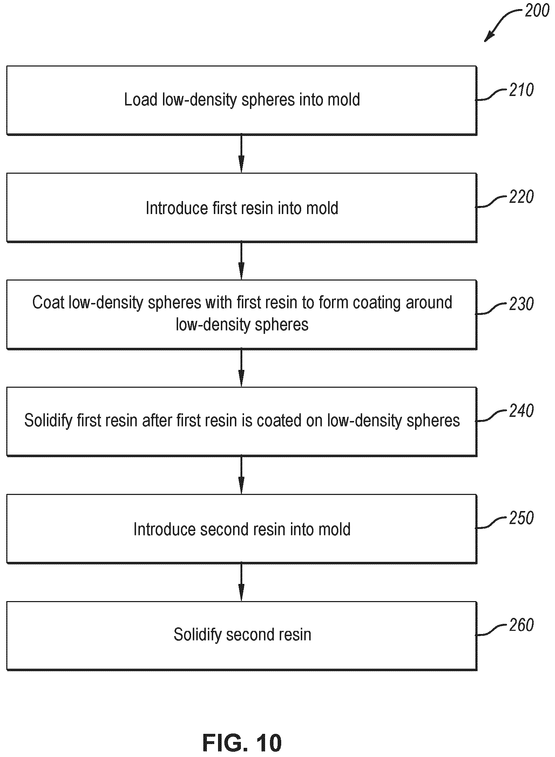

According to some examples, a method 200 of making a syntactic-foam part, such as the syntactic-foam part 142 of Figure 5, is shown in Figure 10. Referring generally to Figure 10 and specifically to Figures 1 and 2, the method 200 includes (block 210) loading low-density spheres 120 into a mold 102. In some examples, the mold 102 includes a selectively openable lid that selectively covers an opening in the mold 102 through which the low-density spheres 120 can be loaded into the mold 102. The low-density spheres 120 are loaded so that the low-density spheres 120 form a lattice arrangement 130 within the mold 102. In the lattice arrangement 130, each one of the low-density spheres 120 contacts each one of at least two other ones of the low-density spheres 120 at a single contact point 134. The low-density spheres 120 can be arranged to form at least a bi-modal or tri-modal distribution of spheres in some examples. Additionally, in the lattice arrangement 130, an interstitial space 132 is defined between the corresponding one of the low-density spheres 120 and the at least two other ones of the low-density spheres 120. Because the illustrations show the low-density spheres 120 in 2-dimensional space, each interstitial space 132 is shown defined by just three of the low-density spheres 120. However, as can be recognized, the lattice arrangement 130, when considered in 3-dimensional space, would have low-density spheres 120 into the page and/or low-density spheres out of the page. Accordingly, in 3-dimensional space, each interstitial space 132 can be further defined by one or two additional low-density spheres 120. According to some examples, using spheres of a single size, all or portions of the lattice arrangement 130 is at most 74% packed, such as at most 69% packed in some examples, and at most 50% packed in some other examples. As used herein, a lattice arrangement is a 3-dimensional arrangement of objects (e.g., low-density spheres). The 3-dimensional arrangement of objects need not be a perfectly repeating geometrical arrangement of objects to be considered a lattice arrangement. Rather, a lattice arrangement can be any grouping, bed, tight packing, or loose packing of objects, whether forming a perfectly repeating geometrical arrangement, a substantially repeating geometrical arrangement, or a non-repeating geometrical arrangement of the objects. Interstitial spaces are defined herein as spaces between one of the low-density spheres 120 and at least one of: (1) a second low-density sphere 120; and (2) an inner perimeter of the mold 102.

In some examples, the low-density spheres 120, when introduced into the interior cavity 112 of the mold 104, occupy at least 50% of the total volume of the interior cavity 112. In some examples, the low-density spheres 120 occupy not less than 50% and not greater than 99% of the total volume of the interior cavity 112.

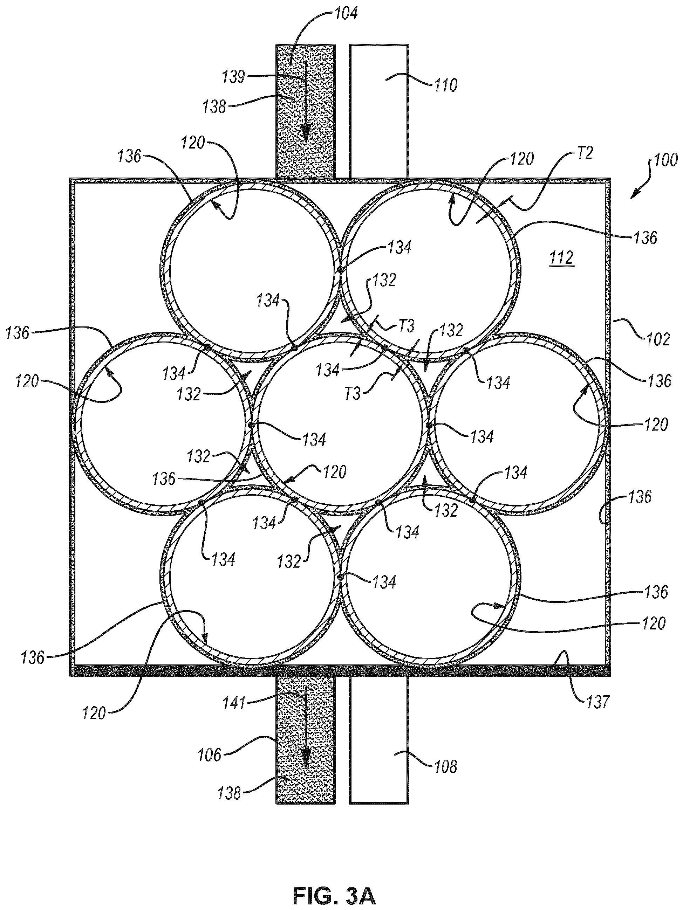

The mold 102 forms part of a molding tool 100, which further includes a first-resin introduction system and a second-resin introduction system. The first-resin introduction system is operable to introduce a first resin into an interior cavity 112 of the mold 102. In some examples, the first-resin introduction system includes a first-resin inlet 104 and a first-resin outlet 106. The first-resin inlet 104 is operable to introduce a first resin 138, from a first-resin source of the first-resin introduction system, into the interior cavity 112 (see, e.g., Figure 3A). The first-resin outlet 106 is operable to drain an excess portion 137 of the first resin 138 from the interior cavity 112 (see, e.g., Figure 3A). Each one of the first-resin inlet 104 and the first-resin outlet 106 can include a valve that is selectively operable to regulate the flow of the first resin 138 into and out of the interior cavity 112, respectively. The second-resin introduction system is operable to introduce a second resin into the interior cavity 112. In some examples, including the illustrated example, the first-resin inlet 104 is located at a top of the mold 102 and the first-resin outlet 106 is located at a bottom of the mold 102. In some other examples, the first-resin inlet 104 and the first-resin outlet 106 can be located in other respective locations on the mold 102.

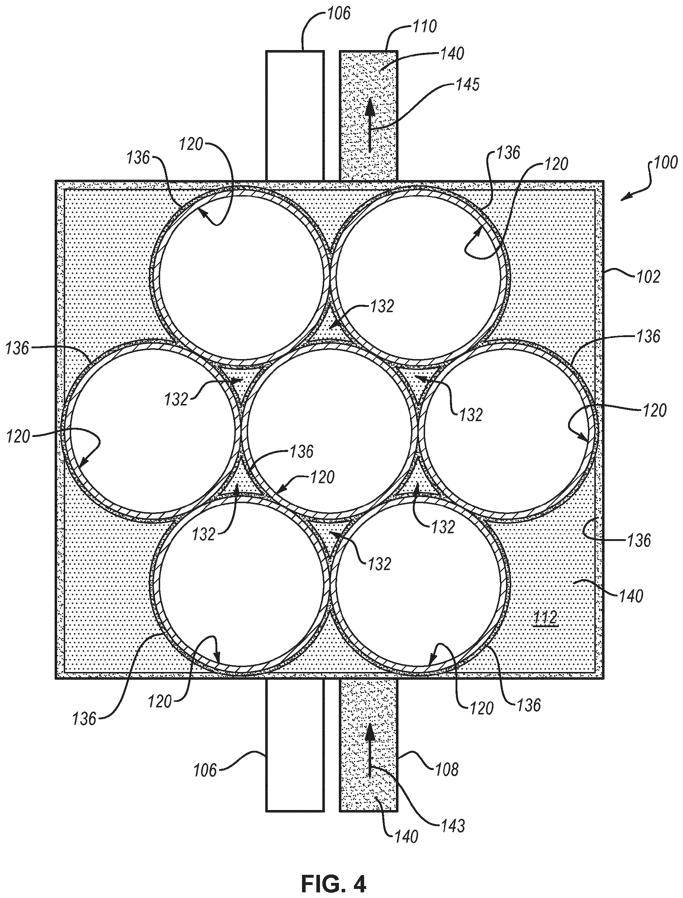

The second-resin introduction system is operable to introduce a second resin into the interior cavity 112 of the mold 102. In some examples, the second-resin introduction system includes a second-resin inlet 108 and a second-resin outlet 110. The second-resin inlet 108 is operable to introduce a second resin 140, from a second-resin source of the second-resin introduction system, into the interior cavity 112 (see, e.g., Figure 4). The second-resin outlet 110 is operable to release excess second resin from the interior cavity 112 (see, e.g., Figure 5). Each one of the second-resin inlet 108 and the second-resin outlet 110 can include a valve that is selectively operable to regulate the flow of the second resin 140 into and out of the interior cavity 112, respectively. In some examples, including the illustrated example, the second-resin inlet 108 is located at the bottom of the mold 102 and the second-resin outlet 110 is located at the top of the mold 102. In some other examples, the second-resin inlet 108 and the second-resin outlet 110 can be located in other respective locations on the mold 102. Alternatively, the tool 100 can include multiple resin inlets 108 and/or resin outlets 110 positioned at various locations about the mold 102.

The size and shape of the interior cavity 112 of the mold 102 defines the size and shape of the syntactic-foam part 142 (see, e.g., Figure 5). The syntactic-foam part 142, and thus the interior cavity 112 of the mold, can have any of various shapes and sizes, such as, but not limited to, standard shapes (e.g., rectangular prisms, cuboid, cube, pyramid, cone, and/or the like) or complex shapes. Additionally, in some examples, the size and shape of the interior cavity 112 is configured to ensure the low-density spheres 120, when loaded into the mold 102, form the lattice arrangement 130 (see, e.g., Figure 2). Therefore, the size and shape of the interior cavity 112 can be dependent on the size of the low-density spheres 120, or vice versa. It is noted that the low-density spheres 120 and the mold 102 are not necessarily to scale. For example, in the illustrated renderings, the size of the low-density spheres 120 is abnormally large relative to the size of the mold 102 for better clarity in showing and describing the examples. In practice, the size of the low-density spheres 120 will be much smaller relative to the size of the mold 102 than as depicted. In some examples, the maximum diameter D of the low-density spheres 120 is between, and inclusive of, 5 microns and 153 millimeters (mm), such as between, and inclusive of, 20 microns and 10,000 microns in some examples, such as between, and inclusive of, 25 microns and 5,000 microns in some examples, such as between, and inclusive of, 250 microns and 35,000 in some other examples, and between, and inclusive of, 500 microns and 1,000 microns in yet some other examples.

According to some examples, as shown in Figures 1-7 and 9, each one or at least one of the low-density spheres 120 is a hollow sphere 121A. Referring to Figure 1, the hollow sphere 121A has a hollow interior space 126 defined by an interior surface 124 of a sidewall that also defines an exterior surface 122 of the low-density sphere 120. The hollow sphere 121A has a thin-walled construction. In other words, a thickness *T1* of the sidewall is smaller than the diameter D of the low-density sphere 120. In some examples, a ratio of the thickness *T1* to the diameter *D* is between, and inclusive of, .001 and 0.1, such as between, and inclusive of, 0.01 and 0.1 in some examples, and between, and inclusive of, 0.02 and 0.08 in some other examples. The hollow sphere 121A can be made of any of various materials, such as, but not limited to, glass, ceramic, metal, polymer, and/or the like.

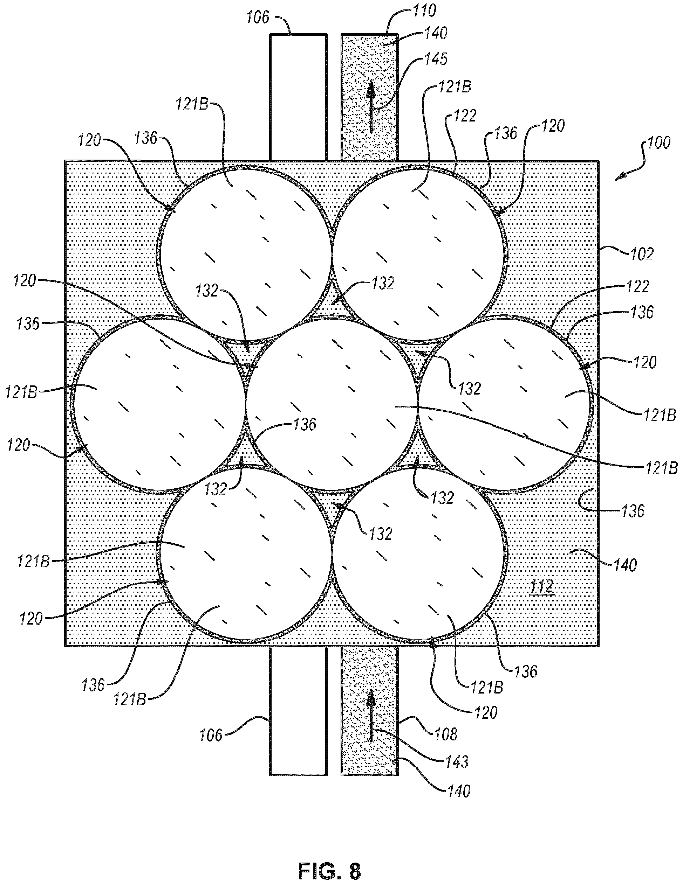

In some alternative examples, such as shown in Figure 8, each one or at least one of the low-density spheres 120 is a non-hollow foam sphere 121B. The non-hollow foam sphere 121B does not have a single hollow space, such as with the hollow sphere 121A. Rather, the non-hollow foam sphere 121B is made of a solid piece of foam, which has multiple hollow spaces in the form of multiple open or closed cells and can include fillers in some examples. In some examples, the foam of the non-hollow foam sphere 121B includes one or more of polystyrene foam, expanded polystyrene (EPS) foam, expanded polypropylene (EPP) foam, polyethylene foam, polyurethane foam, and/or any of various other types of foam.

As used herein, in some examples, a low-density sphere 120 is a hollow or non-hollow sphere having a density of between, and inclusive of, 0.005 g/cm³ and 0.6 g/cm³, such as between, and inclusive of, 0.05 g/cm³ and 0.4 g/cm³ in some examples, between, and inclusive of, 0.1 g/cm³ and 0.3 g/cm³ in some other examples, between, and inclusive of, 0.02 g/cm³ and 0.15 g/cm³ in yet some other examples, and between, and inclusive of, 0.015 g/cm³ and 0.03 g/cm³ in some further examples.

Although not shown, in some examples, the low-density spheres 120 can be pre-coated with a uniform coating before being loaded into the mold 102 at block 210. The uniform coating has a constant (i.e., non-variable) thickness across the sphere. In effect, if pre-coated, the uniform coating defines the exterior surface 122 of the low-density sphere 120 such that the single contact point 134 is between points on the uniform coating. The uniform coating can be made of any of various materials, such as, but not limited to, a pre-ceramic material, resin matrix composite material, nano-scale materials, glass, water glass, colloidal silica nanoparticles, polymer, ceramic, and/or the like. In some cases, such as when the low-density sphere 120 is a non-hollow foam sphere, the uniform coating can provide strength and/or add thermal conductivity to the underlying sphere.

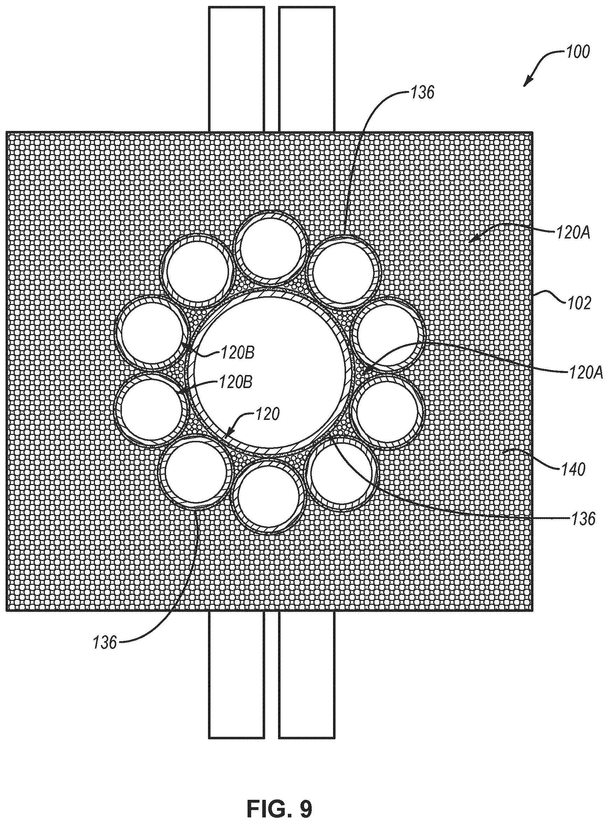

In some examples, such as shown in Figure 2, all the low-density spheres 120 loaded into the mold 102 at block 210 have the same size. However, in some other examples, such as shown in Figure 9, the low-density spheres loaded into the mold 102 at block 210 can have different sizes and can be loaded into the mold 102 at separate times corresponding to their sizes. In other words, at least one (e.g., some) of the low-density spheres 120 can be sized differently than at least one other (e.g., some others) of the low-density spheres 120. In Figure 9, for example, third low-density spheres 120B are loaded into the mold 102 along with a low-density sphere 120 where the low-density sphere 120 is bigger than the third low-density spheres 120B. The size of the differently-shaped low-density spheres are selected, in view of the size of the mold 102, so that the differently-shaped low-density spheres form a lattice arrangement as described above.

As shown generally in Figure 10 and specifically in Figure 3A, after the low-density spheres 120 are loaded into the mold 102 at block 210, the method 200 additionally includes (block 220) introducing a first resin 138 into the mold 102 in the direction of 139. Referring to Figure 3A, in some examples, the first resin 138 is introduced into the mold 102 through the first-resin inlet 104 at the top of the mold 102 and allowed to flow in a top-to-bottom or generally top-to-bottom direction (i.e., a direction parallel or generally parallel to the directional arrows 139) from the top of the mold 102 to the bottom of the mold 102. In some examples, the first resin 138 is passively gravity-fed through the mold 102 in the top-to-bottom or generally top-to-bottom direction. However, in some other examples, the flow of the first resin 138 through the mold 102 is actively pushed and/or actively pulled to urge the first resin 138 to flow in the top-to-bottom or generally top-to-bottom direction from the top of the mold 102 to the bottom of the mold 102. According to some examples, the first resin 138 can be actively pushed via positive pressure introduced at the top of the mold 102, such as via a positive pressure device (e.g., blower, compressor, etc.). In yet some examples, the first resin 138 can be actively pulled via a negative pressure introduced at the bottom of the mold 102, such as via a negative pressure device (e.g., a vacuum device). Although not shown, in some alternative examples, the first resin 138 can be introduced into the mold 102 from a bottom of the mold 102 and allowed to flow upward in a bottom-to-top or generally bottom-to-top direction to fill the mold 102 and coat the low-density spheres 120. In yet some other examples, the first resin 138 can be introduced into the mold 102 from a side of the mold 102 and allowed to flow upward and downward to fill the mold 102 and coat the low-density spheres 120.

Referring generally to Figure 10 and specifically to Figure 3A, the method 200 additionally includes (block 230) coating the low-density spheres 120, in the lattice arrangement 130 in the mold 102, with the first resin 138 introduced into the mold 102 at block 220. Coating the low-density spheres 120 at block 230 forms a coating 136, made of the first resin 138, around an entirety of each one of the low-density spheres 120. The low-density spheres 120 are coated as the first resin 138 flows through the mold 102 and the first resin 138 contacts and adheres to the exterior surface 122 of the low-density spheres 120. The method of introducing the first resin 138 can promote the adhesion of the first resin 138 to and the coating of the first resin 138 onto the low-density spheres 120. In some examples, the first resin 138 is aspirated or vaporized and sprayed into the mold 102. According to a few examples, to promote adhesion of the first resin 138 to the exterior surfaces 122 of the low-density spheres 120 (particularly when the low-density spheres 120 are made of a material having relatively low adhesion properties, such as polystyrene), the method 200 can also include applying an adhesion-promoting agent onto the exterior surfaces 122 before the first resin 138 is introduced into the mold 102. The adhesion-promoting agent or wetting agent can be any of various agents configured to promote adhesion, such as, but not limited to silane.

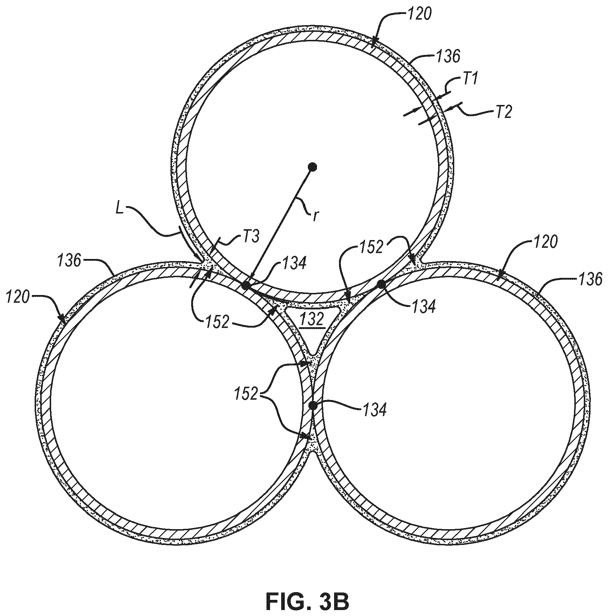

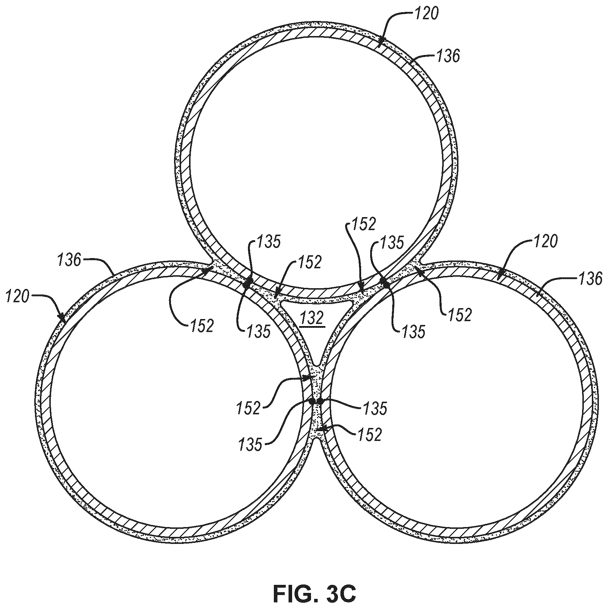

As the first resin 138 flows through the mold 102 and coats the entirety of low-density spheres 120, the narrow spaces between adjacent ones of the low-density spheres 120 (i.e., in close proximity to or around points 135 of adjacent ones of the low-density spheres 120 nearest each other, or nearest points) induces wicking or capillary action of the first resin 138 into the narrow spaces (see, e.g., Figures 3B and 3C). The accumulation of the first resin 138 into these narrow spaces increases the thickness of the first resin 138 and creates thickened regions 152 of the first resin 138. Accordingly, the first resin 138 is thickened or built-up at locations around the points 135 of adjacent ones of the low-density spheres 120 nearest each other. The increased thickness of the first resin 138 within the thickened regions 152 around the points 135 strengthens the joint between the adjacent ones of the low-density spheres 120 and thus strengthens the syntactic-foam part 142. Moreover, the filling of the narrow spaces increases the bond area between the adjacent ones of the low-density spheres 120, which reduces stress risers and thus increases the overall durability of the syntactic-foam part 142 and its ability to resist crushing. The size of the thickened region 152 around the points 135 can be defined as a circumferential distance L that the thickened region 152 extends away from the points 135. In some examples, the distance L is between, and inclusive of, 5% and 37.5% of the radius *r* of the low-density sphere 120, such as between, and inclusive of, 10% and 25% of the radius *r* of the low-density sphere 120 in some examples, and between, and inclusive of, 5% and 15% of the radius *r* of the low-density sphere 120 in some other examples.

Because the thickness of the first resin 138 is thicker in the thickened region 152 than away from the thickened region 152 (see, e.g., Figure 3B), the coating 136 around each one of the low-density spheres 120 has a variable thickness or a thickness that varies. More specifically, the thickness T2 of the coating 136 away from the thickened region 152 is less than a maximum thickness *T3* of the thickened region 152. In some examples, the thickness of the coating 136 around each one of the low-density spheres 120, except at thickened regions 152, is constant (e.g., the thickness *T2* is constant). According to some examples, a ratio of the maximum thickness *T3* to the thickness T2 is between, and inclusive of, 2 and 10, such as between, and inclusive of, 3 and 5 in some examples, and between, and inclusive of, 3.5 and 4.5 in some other examples. The thickness *T2* of the coating 136 is based on any of various factors, such as, but not limited to, the viscosity of the first resin 138 when introduced into the mold 102 (which itself is based on a number of factors, such as temperature of the first resin 138), the state of the first resin 138 (i.e., fluid or gas), the pressure within the mold 102, the flow rate of the first resin 138 through the mold 102, the adhesion properties of the low-density spheres 120, the method of introduction of the first resin 138 into the mold 102, the presence or absence of a solvent in the first resin 138, and the like. Any one or more of these factors can be controlled to achieve a desired value for the thickness T2.

As shown in Figure 3B, in some examples, the wicking force of the first resin 138 is not enough to separate the adjacent ones of the low-density spheres 120 away from each other. Accordingly, in such examples, the adjacent ones of the low-density spheres 120 remain in contact at the single contact point 134 while the thickened region 152 of the first resin 138 forms around the single contact point 134. In this manner, the single contact point 134 is reinforced and stresses are distributed to the thickened region 152 of the first resin 138, rather than accumulating at the single contact point 134 and forming a stress riser. The single contact point 134 is created when the points 135, defined as the points of adjacent ones of the low-density spheres 120 nearest each other, are also in contact with each other. In other words, the single contact point 134 exists when a distance between the points 135 is zero.

Referring to Figure 3C, according to some examples, the wicking force of the first resin 138 is enough to separate the adjacent ones of the low-density spheres 120 away from each other. In such examples, the adjacent ones of the low-density spheres 120 are separated by the first resin 138, as the first resin 138 is introduced into the mold 102 and coats the low-density spheres 120, so that a gap, filled by the first resin 138, exists between the points 135 of adjacent ones of the low-density spheres 120. Moreover, the thickened region 152 of the first resin 138 forms between and around the points 135. In this manner, the joint between adjacent ones of the low-density spheres 120 is reinforced and stresses are distributed to the thickened region 152 of the first resin 138, rather than accumulating at a single contact point. To promote separation of adjacent ones of the low-density spheres 120, after the low-density spheres 120 form the lattice arrangement 130 in the mold 102, and enable the first resin 138 to fill in the gap between the points 135 between the adjacent ones of the low-density spheres 120, the interior cavity 112 of the mold 102 can be pressurized to shrink the size of the low-density spheres 120 as the first resin 138 coats the low-density spheres 120. In some alternative examples, to promote separation of adjacent ones of the low-density spheres 120 and enable the first resin 138 to fill in the gap between the points 135 between the adjacent ones of the low-density spheres 120, the interior cavity 112 of the mold 102 can be only partially filed with the first resin 138, which allows the low-density spheres 120 to separate until a desired gap size is established between adjacent ones of the low-density spheres 120.

As defined herein, an entirety of a low-density sphere 120 is coated with the first resin 138 when all or substantially all of the low-density sphere 120 is coated with the first resin 138, or, when a single contact point 134 between adjacent ones of the low-density spheres 120 is maintained, all or substantially all of the low-density sphere 120, except for the single contact point 134, is coated with the first resin 138.

The first resin 138 can be any of various types of resin conducive to coating low-density spheres. According to some examples, the first resin 138 is one or more of a pre-ceramic resin (e.g., silane pre-ceramic resin), a resin matrix composite material (i.e., reinforcement materials embedded in a matrix material), nano-scale materials introduced via a slip cast process, glass, water glass (e.g., sodium silicate), a high-modulus polymer (e.g., highly cross-linked stiff-chain polymer, nano-particle loaded polymer, colloidal silica nanoparticle loaded polymer, and/or crystalline polymers), and/or the like. The reinforcement materials of the resin matrix composite material can be any of various materials, such as fumed silica, nano-particles, milled carbon fibers, and/or the like. In some examples, the first resin 138 includes a solvent that helps thin the first resin 138 and promote coating of the low-density spheres.

Referring to Figure 3A, because the first resin 138 is specifically formulated and controlled to coat surfaces, the walls of the mold 102 that define the interior cavity 112 are also coated with the coating 136. Any excess portion 137 of the first resin 138 introduced into the mold 102, but not coating the low-density spheres 120 or the walls of the mold 102, collects at the bottom of the mold 102. The excess portion 137 of the first resin 138 can then be drained from the mold 102 (in the direction of 141) via the first-resin outlet 106 as a step of the method 200. If the first resin 138 contains a solvent, the solvent, as well as any other excess portion of the first resin 138 can be drained from the mold 102 as part of the method 200.

In some examples, after coating the low-density spheres 120 at block 230, the method 200 includes washing the coated low-density spheres so that the portion of the coating 136 about most of the low-density spheres and having the thickness T2 is removed from the low-density spheres and only the thickened regions 152 of the coating 136 remain. Alternatively, the coated low-density spheres can be washed so that not all of the coating 136 around the thickened regions 152 is removed, but rather only some of the coating 136 is removed to merely reduce the thickness T2. The portion of the coating 136 removed from the low-density spheres can then be drained from the mold 102 via the first-resin outlet 106.

Referring generally to Figure 10, after coating the low-density spheres 120 at block 230, the method 200 also includes (block 240) solidifying the first resin 138. Solidifying the first resin 138 includes changing the state of the first resin 138 from one state to a harder state (e.g., from a flowable or semi-flowable state to a non-flowable state), such as changing the first resin 138 from a fluid to a solid. According to some examples, solidifying the first resin 138 includes partially or fully curing or drying the first resin 138. Fully curing the first resin 138 can include raising the temperature of the first resin 138 to a first cure temperature of the first resin 138. In some examples, the first resin 138 is partially cured at block 240 by raising the temperature of the first resin 138 to a temperature between, and inclusive of, 100°C and 400°C, and then fully cured by firing the first resin 138 to a temperature between, and inclusive of, 700°C and 1,600°C, such as between, and inclusive of, 800°C and 1,200°C, in some examples. In yet some alternative examples, the first resin 138 can be solidified at block 240 when by holding the first resin 138 at room temperature (e.g., 20-22°C) for 2-24 hours or holding the first resin 138 at a temperature above room temperature (e.g., between 60°C and 350°C) for 30 minutes to 4 hours. In some alternative examples, the first resin 138 is partially or fully cured via alternative methods, such as radiation processing (e.g., ultraviolet radiation processing, electron beam processing, x-ray processing, catalyst curing (e.g., a reaction of multiple parts mediated by a catalyst), etc.) of the first resin 138. The curing of the first resin 138 can be irreversible (e.g., the first resin 138 can be a thermoset material) or reversible (e.g., the first resin 138 can be a thermoplastic material). When the first resin 138 is a pre-ceramic resin, solidifying the first resin 138 at block 240 can include converting the pre-ceramic resin into a ceramic resin. According to some examples, the first resin 138, and thus the coating 136, can be an electrically conductive resin (so that electrically connectivity can be established from coating to coating through the part if desired), a thermally conductive resin, or a combination of both.

Although the coating 136 is shown in the illustrated examples as having a single layer, in some examples, the coating 136 can have multiple layers of resin so that the thickness of the coating 136 is the combined thicknesses of the individual layers of the coating 136. Each one of the layers of a coating 136, having multiple layers, can be formed in the same manner as described in blocks 220-240 of the method 200, including draining excess resin as part of block 230. In other words, the blocks 220-240 can be repeated until a desirable number of layers of the coating 136 are formed. However, in some examples, the step of solidifying the resin at block 240 is executed only after all the layers of the coating 136 are applied onto the low-density spheres 120 by repeating the steps of blocks 220-230. The resins of the multiple layers of the coating 136 can be the same type of resin or different types of resin. In some examples, where the resins of the coating 136 are different types of resins, the first resin applied onto the low-density spheres 120 can be a resin that seals the low-density spheres 120 and the second layer, and subsequent layers, can be a resin that is stronger than the resin that seals the low-density spheres 120. According to some other examples, where the resins of the coating 136 are different types of resins, the first resin applied onto the low-density spheres 120 can be a solid or homogenous resin and the second layer, and subsequent layers, can be a composite resin or a resin that has small microspheres.

As shown generally in Figure 10 and specifically in Figure 4, after the first resin 138 is solidified at block 240, the method 200 also includes (block 250) introducing a second resin 140 into the mold 102 so that the second resin 140 fills the mold 102 and the interstitial spaces 132 between the low-density spheres 120. Referring to Figure 4, in some examples, the second resin 140 is introduced into the mold 102 (in the direction of 143) through the second-resin inlet 108 at the bottom of the mold 102 and flows through the mold 102 in a bottom-to-top or generally bottom-to-top direction (i.e., a direction parallel or generally parallel to the directional arrows) from the bottom of the mold 102 to the top of the mold 102. In some examples, the second resin 140 is pumped (i.e., actively pushed) through the second-resin inlet 108 and into the mold 102 via a pump (not shown). In some examples, the second resin 140 can also be actively pulled via a negative pressure introduced at the top of the mold 102, such as via a negative pressure device (e.g., a vacuum device). After the mold 102 is filled with the second resin 140, such that the low-density spheres 120 and the coating 136 are embedded within the second resin 140, any excess portion of the second resin 140 is removed from the mold 102 in the direction of 145, such as via the second-resin outlet 110.

Referring again to Figure 10, after the second resin 140 is introduced into and fills the mold 102, the method 200 also includes (block 260) solidifying the second resin 140. According to some examples, solidifying the second resin 140 includes partially or fully curing the second resin 140. Fully curing the second resin 140 can include raising the temperature of the second resin 140 to a second cure temperature of the second resin 140. To promote void-free curing of the second resin 140, the interior cavity 112 of the mold 102 can be pressurized. In some alternative examples, the second resin 140 is partially or fully cured via alternative methods, such as ultraviolet processing of the second resin 140. The curing of the second resin 140 can be irreversible (e.g., the second resin 140 can be a thermoset material) or reversible (e.g., the second resin 140 can be a thermoplastic material).

In some examples, and without limitation, the solidification temperature of the second resin 140 is between, and inclusive of, 21°C (i.e., room temperature) and 232°C, such as between, and inclusive of, 21°C and 180°C, in some examples, between, and inclusive of, 21°C and 125°C, in some other examples, and between, and inclusive of, 21°C and 65°C, in yet some other examples. The second resin 140 is held at the solidification temperature for a predetermined period of time (and/or the second resin 140 can undergo multiple identical or different cure cycles associated with specific temperatures and ramp rates) to effectuate the solidification of the second resin 140.

The second resin 140 can be any of various types of resin conducive to embedding and immobilizing the low-density spheres 120. According to some examples, the second resin 140 is one or more of a pure resin material (e.g., epoxy resin), a pre-ceramic resin (e.g., silane pre-ceramic resin), a resin matrix composite material (i.e., reinforcement materials embedded in a matrix material), a high-modulus polymer (e.g., highly cross-linked stiff-chain polymer, nano-particle loaded polymer, colloidal silica nanoparticle loaded resin), and the like. The reinforcement materials of the resin matrix composite material can be any of various materials, such as fused silica, nano-particles, milled carbon fibers, and/or the like. According to some examples, the second resin 140 includes density-reducing components, such as smaller low-density spheres (e.g., hollow spheres such as hollow glass, ceramic, or polymer spheres), which helps to reduce the density of the second resin 140 without compromising the strength of the second resin 140.

The second resin 140 is different than the first resin 138. For example, the second resin 140 is a different type of resin than the first resin 138, or the second resin 140 is configured differently than the first resin 138. For example, the first resin 138 can be stronger, denser, stiffer, and/or more durable than the second resin 140. Because the percentage of the syntactic-foam part 142 made of the first resin 138 is significantly lower than that of the second resin 140 (e.g., the first resin 138 forming only a coating on the low-density spheres 120), the first resin 138 can be stronger and stiffer than the second resin 140 without significantly negatively affecting the overall density of the part, while helping to improve the overall strength of the part. According to some examples, the first cure temperature of the first resin 138 is lower than the second cure temperature of the second resin 140. Such a configuration enables the first resin 138 to be cured at a temperature that does not damage the low-density spheres 120. When cured, the first resin 138, which can be stronger, stiffer, denser, and/or more durable than the low-density spheres 120, protects the integrity of the low-density spheres 120 when the second resin 140 is infused and/or cured at a higher temperature, such as a temperature that would otherwise soften or damage the low-density spheres 120. Accordingly, in some examples, the first cure temperature is less than a softening temperature of the low-density spheres 120, and the second cure temperature is greater than the softening temperature of the low-density spheres 120. A softening temperature can be the temperature at which the spheres soften sufficiently so that they no longer carry mechanical load.

According to some examples, after the second resin 140 is solidified at block 260, the low-density spheres 120, the coating 136, and the second resin 140 form a syntactic-foam part 142 (see, e.g., Figure 5). As shown in Figure 5, the method 200 can further include removing the syntactic-foam part 142 from the mold 102. The syntactic-foam part 142, after being removed from the mold 102, can form a stand-alone part or be combined with one or more other parts or components (e.g., other syntactic-foam parts or blocks) to form a larger or more complex part. In some examples, the coating 136 on the interior surfaces of the mold 102 may be removed along with the syntactic-foam part 142, which can then be removed from the part or form a portion of the part.

According to some examples, the syntactic-foam part 142 has a density between, and inclusive of, 0.2 g/cm³ and 0.5 g/cm³, a crush strength between, and inclusive of, 200 psi (1.38 MPa) and 30,000 psi (207 MPa) (e.g., between, and inclusive of, 500 psi (2.45 MPa) and 15,000 psi (103 MPa) in some examples, and between, and inclusive of, 1,000 psi (6.89 MPa) and 10,000 psi (68.9 MPa), in some other examples).

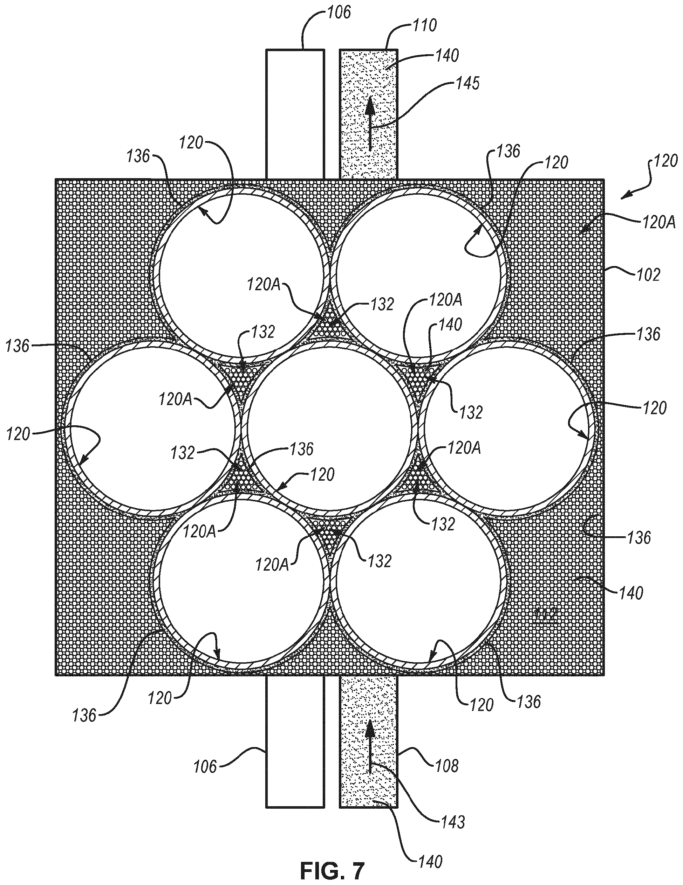

Referring to Figure 7, according to some examples, after the first resin 138 is solidified at block 240 and before the second resin 140 is introduced into the mold 102, the method 200 can include loading second low-density spheres 120A into the mold 102 around the low-density spheres 120 and/or within the interstitial spaces 132 defined between the low-density spheres 120. The second low-density spheres 120A can be considerably smaller than the low-density spheres 120. In some examples, the second low-density spheres 120A are between, and inclusive of 3 and 50 times smaller than the low-density spheres 120, such as between, and inclusive of 5 and 25 times smaller than the low-density spheres 120 in some examples, and between, and inclusive of 7 and 20 times smaller than the low-density spheres 120 in some other examples. After the second low-density spheres 120A are loaded into the mold 102, the second resin 140 can be introduced into the mold 102 at block 250 so that the second resin 140 fills the mold 102 around the second low-density spheres 120A and the second low-density spheres 120A are embedded in or enveloped by the second resin 140. In some examples, the second low-density spheres 120A are the same type of sphere (e.g., same material) as the low-density spheres 120, but smaller. However, in some alternative examples, the second low-density spheres 120A are a different type of sphere than the low-density spheres 120.

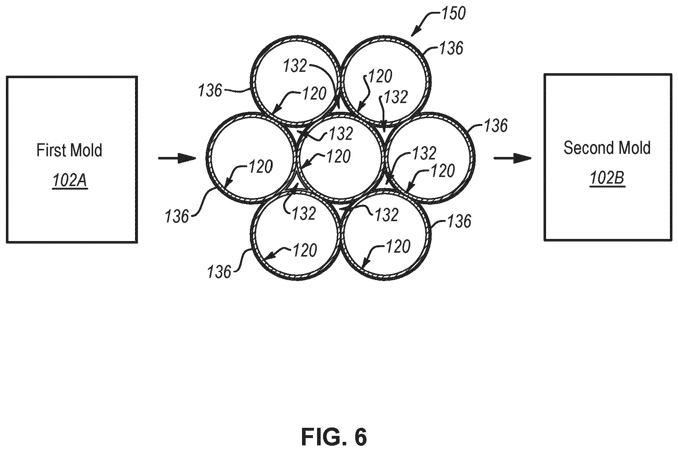

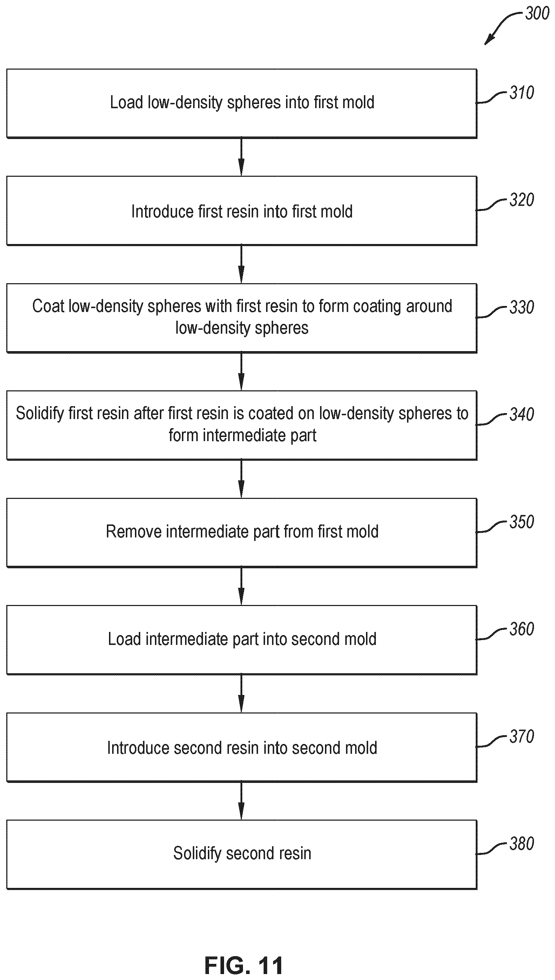

Referring generally to Figure 11, and specifically to Figure 6, according to some examples, a method 300 of making a syntactic-foam part 142 (see, e.g., Figure 5) includes steps similar to those of blocks 210-240 of the method 200. More specifically, the method 300 includes (block 310) loading low-density spheres 120 into a first mold 102A such that the low-density spheres 120 form a lattice arrangement 130 within the first mold 102A (see, e.g., Figure 2), (block 320) introducing a first resin 138 into the first mold 102A, (block 330) coating the low-density spheres 120 in the lattice arrangement 130 with the first resin 138 to form a coating 136 around an entirety of each one of the low-density spheres 120, and (block 340) solidifying the first resin 138. However, instead of introducing a second resin 140 into the first mold 102A to fill the first mold 102A, the method 300 includes (block 350) removing an intermediate part 150 from the first mold 102A and (block 360) loading the intermediate part 150 into a second mold 102B. The intermediate part 150 includes the low-density spheres 120 coupled together by the solidified coating 136. In some examples, after removing the intermediate part 150 from the first mold 102A and before loading the intermediate part 150 into the second mold 102B, the method 300 can include a secondary solidification step that further solidifies the coating 136. In some examples, the first resin 138 is only partially cured at block 340 while in the first mold 102A and then fully cured after the intermediate part 150 is removed from the first mold 102A at block 350.

The method 300 further includes (block 360) loading the intermediate part 150 into a second mold 102B and (block 370) introducing a second resin 140 into the second mold 102B so that the second resin 140 fills the second mold 102B around and within the interstitial spaces 132 of the intermediate part 150. Additionally, the method 300 includes (block 380) solidifying the second resin 140 after the second resin 140 fills the second mold 102B and the interstitial spaces 132. The syntactic-foam part 142 formed via the steps associated with blocks 310-380 can then be removed from the second mold 102B. In some examples, the first mold 102A and the second mold 102B are different molds. However, in some other examples, the first mold 102A and the second mold 102B are the same mold. Additionally, after the intermediate part 150 is loaded into the second mold 102B and before the second resin 140 is introduced into the second mold 102B, second low-density spheres, similar to the second low-density spheres 120A, can be loaded into the second mold 102B around the intermediate part 150 and/or within the interstitial spaces 132 of the intermediate part 150.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. A method (200) of making a syntactic-foam part (142), the method (200) comprising:
   loading low-density spheres (120) into a mold (102) such that the low-density spheres (120) form a lattice arrangement (130) within the mold (102) where each one of the low-density spheres (120) contacts each one of at least two other ones of the low-density spheres (120) at a single contact point (134) and an interstitial space (132) is defined between the corresponding one of the low-density spheres (120) and the at least two other ones of the low-density spheres (120);
   introducing a first resin (138) into the mold (102);
   coating the low-density spheres (120) in the lattice arrangement (130) with the first resin (138) to form a coating (136), made of the first resin (138), around an entirety of each one of the low-density spheres (120);
   solidifying the first resin (138) after the first resin (138) is coated on the low-density spheres (120);
   after solidifying the first resin (138), introducing a second resin (140) into the mold (102) so that the second resin (140) fills the mold (102) and the interstitial space (132); and
   solidifying the second resin (140) after the second resin (140) fills the mold (102) and the interstitial space (132).
Example 2. The method (200) according to Example 1, wherein coating the low-density spheres (120) comprises wicking portions of the first resin (138) into gaps defined between adjacent ones of the low-density spheres (120) and around the single contact point (134) between the adjacent ones of the low-density spheres (120) so that a thickness of the coating (136), around points (135) of the adjacent ones of the low-density spheres (120) nearest each other, is greater than the thickness of the coating (136) at locations away from the points (135).
Example 3. The method (200) according to Example 1 or Example 2, wherein the low-density spheres (120) are coated so that the coating (136) around each one of the low-density spheres (120) has a variable thickness.
Example 4. The method (200) according to any preceding Example, further comprising draining an excess portion (137) of the first resin (138) from the mold (102) prior to solidifying the first resin (138).
Example 5. The method (200) according to Example 4, wherein:
   coating the low-density spheres (120) comprises flowing the first resin (138) through the mold (102); and
   the excess portion (137) of the first resin (138) is drained from a bottom of the mold (102).
Example 6. The method (200) according to Example 5, further comprising at least one of:
   actively pushing the first resin (138), from a top of the mold (102), to urge the first resin (138) to flow in a top-to-bottom or generally top-to-bottom direction through the mold (102); and
   actively pulling the first resin (138), from the bottom of the mold (102), to urge the first resin (138) to flow in the top-to-bottom or generally top-to-bottom direction through the mold (102).
Example 7. The method (200) according to Example 5 or Example 6, wherein the second resin (140) is introduced at the bottom of the mold (102) and fills the mold (102) in a bottom-to-top or generally bottom-to-top direction.
Example 8. The method (200) according to any of Examples 4 - 7, wherein:
   the first resin (138), when introduced into the mold (102), comprises a curable material and a solvent; and
   draining the excess portion (137) of the first resin (138) comprises draining at least the solvent of the first resin (138).
Example 9. The method (200) according to any preceding Example, wherein:
   the first resin (138) has a first cure temperature;
   the second resin (140) has a second cure temperature; and
   the first cure temperature is lower than the second cure temperature.
Example 10. The method (200) according to Example 9, wherein:
   the low-density spheres (120) are made of a polymeric material having a softening temperature;
   the first cure temperature is less than the softening temperature; and
   the second cure temperature is greater than the softening temperature.
Example 11. The method (200) according to any preceding Example, further comprising, after curing the first resin (138) and before introducing the second resin (140), loading at least one second low-density sphere (120A) into the mold (102) such that a corresponding one of the at least one second low-density sphere (120A) is located within the interstitial space (132), wherein the second resin (140), when introduced into the mold (102), fills the interstitial space (132) around the corresponding one of the at least one second low-density sphere (120A).
Example 12. The method (200) according to any preceding Example, wherein:
   the first resin (138) comprises a pre-ceramic material; and
   solidifying the first resin (138) converts the pre-ceramic material into a ceramic material.
Example 13. The method (200) according to any preceding Example, wherein the first resin (138) is at least one of stiffer or stronger than the second resin (140).
Example 14. The method (200) according to any preceding Example, further comprising, after loading the low-density spheres (120) and before introducing the first resin (138), applying an adhesion-promoting agent to the low-density spheres (120).
Example 15. The method (200) according to any preceding Example, wherein the first resin (138) is a resin matrix composite material that comprises reinforcement materials embedded in a matrix material.
Example 16. The method (200) according to any preceding Example, wherein:
   at least a first one of the low-density spheres (120) has a first size;
   at least a second one of the low-density spheres (120) has a second size; and
   the first size is different than the second size.
Example 17. A syntactic-foam part (142), comprising:
   low-density spheres (120) arranged in a lattice arrangement (130) of at least one set of at least three low-density spheres (120) so that an interstitial space (132) is defined between the low-density spheres (120) of each one of the at least one set of at least three low-density spheres (120);
   a coating (136), made of a first resin (138), around an entirety of each one of the low-density spheres (120), wherein a thickness of the coating (136) around each one of the low-density spheres (120) varies and is greater around points (135) of adjacent ones of the low-density spheres (120) nearest each other of the at least one set of at least three low-density spheres (140) than at locations away from the points (135); and
   a second resin (140) within the interstitial space (132) and enveloping the low-density spheres (120).
Example 18. The syntactic-foam part (142) according to Example 17, wherein:
   the first resin (138) has a first cure temperature;
   the second resin (140) has a second cure temperature; and
   the first cure temperature is lower than the second cure temperature.
Example 19. The syntactic-foam part (142) according to Example 18, wherein:
   the low-density spheres (120) are made of a polymeric material having a softening temperature;
   the first cure temperature is less than the softening temperature; and
   the second cure temperature is greater than the softening temperature.
Example 20. The syntactic-foam part (142) according to any of Examples 17 - 19, wherein the first resin (138) is at least one of stiffer or stronger than the second resin (140).
Example 21. The syntactic-foam part (142) according to any of Examples 17 - 20, further comprising a second low-density sphere (120A) within the interstitial space (132), wherein the second resin (140) within the interstitial space (132) envelopes the second low-density sphere (120A).
Example 22. The syntactic-foam part (142) according to any of Examples 17 - 21, wherein a maximum thickness of the coating (136) is less than a maximum thickness of the second resin (140).
Example 23. The syntactic-foam part (142) according to any of Examples 17 - 22, wherein the syntactic-foam part forms an entirety or a portion of a marine-based system selected from the group consisting of submarine, watercraft, oil drilling rig, oil drilling component, and marine platform.
Example 24. The syntactic-foam part according to any of Examples 17 - 23, wherein:
   at least a first one of the low-density spheres (120) has a first size;
   at least a second one of the low-density spheres (120) has a second size; and
   the first size is different than the second size.
Example 25. A method (300) of making a syntactic-foam part (142), the method (300) comprising:
   loading low-density spheres (120) into a first mold (102A) such that the low-density spheres (120) form a lattice arrangement (130) within the first mold (102A) where each one of the low-density spheres (120) contacts each one of at least two other ones of the low-density spheres (120) at a single contact point (134) and an interstitial space (132) is defined between the corresponding one of the low-density spheres (120) and the at least two other ones of the low-density spheres (120);
   introducing a first resin (138) into the first mold (102A);
   coating the low-density spheres (120) in the lattice arrangement (130) with the first resin (138) to form a coating (136), made of the first resin (138), around an entirety of each one of the low-density spheres (120);
   solidifying the first resin (138) after the first resin (138) is coated on the low-density spheres (120) so that the coating (136) and the low-density spheres (120) form an intermediate part (150);
   removing the intermediate part (150) from the first mold (102A);
   loading the intermediate part (150) into a second mold (102B);
   introducing a second resin (140) into the second mold (102B) so that the second resin (140) fills the second mold (102B) and the interstitial space (132); and
   solidifying the second resin (140) after the second resin (140) fills the second mold (102B) and the interstitial space (132).
Example 26. The method (300) according to Example 25, wherein:
   at least a first one of the low-density spheres (120) has a first size;
   at least a second one of the low-density spheres (120) has a second size; and
   the first size is different than the second size.
Example 27. The method (300) according to Example 25 or Example 26, wherein coating the low-density spheres (120) comprises wicking portions of the first resin (138) into gaps defined between adjacent ones of the low-density spheres (120) and around the single contact point (134) between the adjacent ones of the low-density spheres (120) so that a thickness of the coating (136), around points (135) of the adjacent ones of the low-density spheres (120) nearest each other, is greater than the thickness of the coating (136) at locations away from the points (135).
Example 28. The method (300) according to any of Examples 25 - 27, wherein the low-density spheres (120) are coated so that the coating (136) around each one of the low-density spheres (120) has a variable thickness.
Example 29. The method (300) according to any of Examples 25 - 28, further comprising draining an excess portion (137) of the first resin (138) from the first mold (102A) prior to solidifying the first resin (138).
Example 30. The method (300) according to Example 29, wherein:
   coating the low-density spheres (120) comprises flowing the first resin (138) through the first mold (102A); and
   the excess portion (137) of the first resin (138) is drained from a bottom of the first mold (102A).
Example 31. The method (300) according to Example 30, further comprising at least one of:
   actively pushing the first resin (138), from a top of the first mold (102A), to urge the first resin (138) to flow in a top-to-bottom or generally top-to-bottom direction through the first mold (102A); and
   actively pulling the first resin (138), from the bottom of the first mold (102A), to urge the first resin (138) to flow in the top-to-bottom or generally top-to-bottom direction through the first mold (102A).
Example 32. The method (300) according to Example 30 or Example 31, wherein the second resin (140) is introduced at the bottom of the second mold (102B) and fills the second mold (102B) in a bottom-to-top or generally bottom-to-top direction.
Example 33. The method (300) according to any of Examples 29 - 32, wherein:
   the first resin (138), when introduced into the first mold (102A), comprises a curable material and a solvent; and
   draining the excess portion (137) of the first resin (138) comprises draining at least the solvent of the first resin (138).
Example 34. The method (300) according to any of Examples 25 - 33, wherein:
   the first resin (138) has a first cure temperature;
   the second resin (140) has a second cure temperature; and
   the first cure temperature is lower than the second cure temperature.
Example 35. The method (300) according to Example 34, wherein:
   the low-density spheres (120) are made of a polymeric material having a softening temperature;
   the first cure temperature is less than the softening temperature; and
   the second cure temperature is greater than the softening temperature.
Example 36. The method (300) according to any of Examples 25 - 35, further comprising,
   after the intermediate part (150) is loaded into the second mold (102B) and before the second resin (140) is introduced into the second mold (102B), loading at least one second low-density sphere (120A) into the second mold (102B) around the intermediate part (150) and/or within the interstitial space (132) of the intermediate part (150).
Example 37. The method (300) according to any of Examples 25 - 36, wherein:
   the first resin (138) comprises a pre-ceramic material; and
   solidifying the first resin (138) converts the pre-ceramic material into a ceramic material.
Example 38. The method (300) according to any of Examples 25 - 37, wherein the first resin (138) is at least one of stiffer or stronger than the second resin (140).
Example 39. The method (300) according to any of Examples 25 - 38, further comprising, after loading the low-density spheres (120) and before introducing the first resin (138), applying an adhesion-promoting agent to the low-density spheres (120).
Example 40. The method (300) according to any of Examples 25 - 39, wherein the first resin (138) is a resin matrix composite material that comprises reinforcement materials embedded in a matrix material.

## Claims

1. A method (200) of making a syntactic-foam part (142), the method (200) comprising:
loading low-density spheres (120) into a mold (102) such that the low-density spheres (120) form a lattice arrangement (130) within the mold (102) where each one of the low-density spheres (120) contacts each one of at least two other ones of the low-density spheres (120) at a single contact point (134) and an interstitial space (132) is defined between the corresponding one of the low-density spheres (120) and the at least two other ones of the low-density spheres (120);
introducing a first resin (138) into the mold (102);
coating the low-density spheres (120) in the lattice arrangement (130) with the first resin (138) to form a coating (136), made of the first resin (138), around an entirety of each one of the low-density spheres (120);
solidifying the first resin (138) after the first resin (138) is coated on the low-density spheres (120);
after solidifying the first resin (138), introducing a second resin (140) into the mold (102) so that the second resin (140) fills the mold (102) and the interstitial space (132); and
solidifying the second resin (140) after the second resin (140) fills the mold (102) and the interstitial space (132).

2. The method (200) according to claim 1, wherein one or more of:
coating the low-density spheres (120) comprises wicking portions of the first resin (138) into gaps defined between adjacent ones of the low-density spheres (120) and around the single contact point (134) between the adjacent ones of the low-density spheres (120) so that a thickness of the coating (136), around points (135) of the adjacent ones of the low-density spheres (120) nearest each other, is greater than the thickness of the coating (136) at locations away from the points (135); and
the low-density spheres (120) are coated so that the coating (136) around each one of the low-density spheres (120) has a variable thickness.

3. The method (200) according to any preceding claim, further comprising draining an excess portion (137) of the first resin (138) from the mold (102) prior to solidifying the first resin (138), and optionally,
the first resin (138), when introduced into the mold (102), comprises a curable material and a solvent; and
draining the excess portion (137) of the first resin (138) comprises draining at least the solvent of the first resin (138).

4. The method (200) according to claim 3, wherein one or more of:
a) coating the low-density spheres (120) comprises flowing the first resin (138) through the mold (102), and the excess portion (137) of the first resin (138) is drained from a bottom of the mold (102), and optionally, the method further comprises at least one of:
actively pushing the first resin (138), from a top of the mold (102), to urge the first resin (138) to flow in a top-to-bottom or generally top-to-bottom direction through the mold (102); and
actively pulling the first resin (138), from the bottom of the mold (102), to urge the first resin (138) to flow in the top-to-bottom or generally top-to-bottom direction through the mold (102); and
b) the second resin (140) is introduced at the bottom of the mold (102) and fills the mold (102) in a bottom-to-top or generally bottom-to-top direction.

5. The method (200) according to any preceding claim, wherein:
the first resin (138) has a first cure temperature, the second resin (140) has a second cure temperature, and the first cure temperature is lower than the second cure temperature; and optionally, wherein:
the low-density spheres (120) are made of a polymeric material having a softening temperature, the first cure temperature is less than the softening temperature, and the second cure temperature is greater than the softening temperature.

6. The method (200) according to any preceding claim, further comprising, after curing the first resin (138) and before introducing the second resin (140), loading at least one second low-density sphere (120A) into the mold (102) such that a corresponding one of the at least one second low-density sphere (120A) is located within the interstitial space (132), and wherein the second resin (140), when introduced into the mold (102), fills the interstitial space (132) around the corresponding one of the at least one second low-density sphere (120A).

7. The method (200) according to any preceding claim, wherein one or more of:
the first resin (138) comprises a pre-ceramic material, and solidifying the first resin (138) converts the pre-ceramic material into a ceramic material;
the first resin (138) is at least one of stiffer or stronger than the second resin (140);
the method further comprises, after loading the low-density spheres (120) and before introducing the first resin (138), applying an adhesion-promoting agent to the low-density spheres (120); and
the first resin (138) is a resin matrix composite material that comprises reinforcement materials embedded in a matrix material.

8. The method (200) according to any preceding claim, wherein:
at least a first one of the low-density spheres (120) has a first size;
at least a second one of the low-density spheres (120) has a second size; and
the first size is different than the second size.

9. A syntactic-foam part (142), comprising:
low-density spheres (120) arranged in a lattice arrangement (130) of at least one set of at least three low-density spheres (120) so that an interstitial space (132) is defined between the low-density spheres (120) of each one of the at least one set of at least three low-density spheres (120);
a coating (136), made of a first resin (138), around an entirety of each one of the low-density spheres (120), wherein a thickness of the coating (136) around each one of the low-density spheres (120) varies and is greater around points (135) of adjacent ones of the low-density spheres (120) nearest each other of the at least one set of at least three low-density spheres (120) than at locations away from the points (135); and
a second resin (140) within the interstitial space (132) and enveloping the low-density spheres (120).

10. The syntactic-foam part (142) according to claim 9, wherein one or more of:
the first resin (138) has a first cure temperature, the second resin (140) has a second cure temperature, and the first cure temperature is lower than the second cure temperature;
the low-density spheres (120) are made of a polymeric material having a softening temperature, the first cure temperature is less than the softening temperature, and the second cure temperature is greater than the softening temperature; and
the first resin (138) is at least one of stiffer or stronger than the second resin (140).

11. The syntactic-foam part (142) according to claim 9 or claim 10, wherein one or more of:
the syntactic-foam part (142) further comprises a second low-density sphere (120A) within the interstitial space (132), wherein the second resin (140) within the interstitial space (132) envelopes the second low-density sphere (120A);
a maximum thickness of the coating (136) is less than a maximum thickness of the second resin (140); and
at least a first one of the low-density spheres (120) has a first size, at least a second one of the low-density spheres (120) has a second size, and the first size is different than the second size.

12. A marine-based system comprising the syntactic-foam part (142) of any of claims 9 - 11, wherein the syntactic-foam part (142) forms an entirety or a portion of the marine-based system, and optionally, wherein the marine-based system is one of a submarine, watercraft, oil drilling rig, oil drilling component, and marine platform.

13. A method (300) of making a syntactic-foam part (142), the method (300) comprising:
loading low-density spheres (120) into a first mold (102A) such that the low-density spheres (120) form a lattice arrangement (130) within the first mold (102A) where each one of the low-density spheres (120) contacts each one of at least two other ones of the low-density spheres (120) at a single contact point (134) and an interstitial space (132) is defined between the corresponding one of the low-density spheres (120) and the at least two other ones of the low-density spheres (120);
introducing a first resin (138) into the first mold (102A);
coating the low-density spheres (120) in the lattice arrangement (130) with the first resin (138) to form a coating (136), made of the first resin (138), around an entirety of each one of the low-density spheres (120);
solidifying the first resin (138) after the first resin (138) is coated on the low-density spheres (120) so that the coating (136) and the low-density spheres (120) form an intermediate part (150);
removing the intermediate part (150) from the first mold (102A);
loading the intermediate part (150) into a second mold (102B);
introducing a second resin (140) into the second mold (102B) so that the second resin (140) fills the second mold (102B) and the interstitial space (132); and
solidifying the second resin (140) after the second resin (140) fills the second mold (102B) and the interstitial space (132).

14. The method (300) according to claim 13, wherein:
at least a first one of the low-density spheres (120) has a first size;
at least a second one of the low-density spheres (120) has a second size; and
the first size is different than the second size.

15. The method (200, 300) of any of claims 1 - 8 or claims 13 - 14, or the syntactic-foam part (142) of any of claims 9 - 11, or the marine-based system of claim 12, wherein a low-density sphere (120) has a density of between, and inclusive of, 0.005 g/cm³ and 0.6 g/cm³.
